Europäisches Patentamt

European Patent Office

Office européen des brevets

(19)

(11) Veröffentlichungsnummer: **0 061 708**
**B1**

(12) **EUROPÄISCHE PATENTSCHRIFT**

(45) Veröffentlichungstag der Patentschrift:
21.11.84

(51) Int. Cl.³: **B 60 P 3/20**

(21) Anmeldenummer: **82102437.9**

(22) Anmeldetag: **24.03.82**

(54) **Kühllastkraftwagen mit zwei Kammern.**

(30) Priorität: **26.03.81 DE 3111877**

(43) Veröffentlichungstag der Anmeldung:
**06.10.82 Patentblatt 82/40**

(45) Bekanntmachung des Hinweises auf die Patenterteilung:
**21.11.84 Patentblatt 84/47**

(84) Benannte Vertragsstaaten:
**AT BE CH FR GB LI NL SE**

(56) Entgegenhaltungen:
**DE - A - 2 040 925**
**FR - A - 2 058 169**
**GB - A - 1 542 492**

(73) Patentinhaber: **Kunststoff- und Kältetechnik Grosskopf GmbH, Leimkugelstrasse 9, D-4300 Essen (DE)**

(72) Erfinder: **Grosskopf, Peter Volker, Am Ruhrstein 25, D-4300 Essen 1 (DE)**

(74) Vertreter: **Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)**

## Beschreibung

Die Erfindung betrifft einen Kühllastkraftwagen gemäß dem Oberbegriff des Anspruches 1 und ein Verfahren zum Betreiben des Kühllastkraftwagens.

Nachteilig ist bei Kühllastkraftwagen dieser Art, daß im hinteren Bereich bei niedrigen Außentemperaturen auch ohne Einschaltung der Kühlung für den hinteren Bereich niedrigere Temperaturen als zulässig auftreten. Im allgemeinen wird der hintere Bereich durch einen Kaltluftstrom aus dem vorderen, kälteren Bereich gekühlt.

Es ist bekannt, daß viele Frachtgüter in engen Temperaturgrenzen von ca. + 1°C bis + 5°C oder einem ähnlichen Temperaturbereich befördert werden müssen. Aufgabe der Erfindung ist es demgemäß, einen Kühllastkraftwagen zu schaffen, in welchem nicht nur Güter bei Tiefkühltemperaturen von ca. − 20 bis − 30°C befördert werden können, sondern der auch in der Lage ist, Güter bei einer einstellbaren Temperatur im plusgradigen Bereich zu transportieren, ohne daß im hinteren Bereich Temperaturen unter 0°C auftreten.

Diese Aufgabe wird bei dem eingangs genannten Kühllastkraftwagen dadurch gelöst, daß in einem zweiten, von dem Elektromotor über den gleichen Ventilator erzeugten Zirkulationsluftstrom ein thermostatgesteuertes Heizelement angebracht ist.

Vorteilhaft, um eine Zwangssteuerung der Verschlußklappen vermeiden zu können, sind diese Rückschlagklappen und bestehen aus einzelnen, durch die Luftzirkulation um eine vertikale Achse verschwenkbaren Lamellen. Durch den Heizluftstrom wird dabei vorteilhaft die sonst durch die auftretenden Fahrzeugschwingungen zu Öffnen neigende Kaltlufteintrittsklappe sicher verschlossen.

Zur Erzeugung des Zirkulationsluftstromes sowohl für den Kühl- als auch für den Heizfall kann vorteilhaft die Ausbildung derart sein, daß der Elektromotor umsteuerbar und der Ventilator doppelt wirkend ist und diese in einem Gehäuse eingebaut sind, in welches einseitig die Saug-Verschlußklappe mündet und welches neben der Ventilatoröffnung eine weitere Rückschlagklappe aufweist, die sich gegenüber dem Gehäuse nach außen öffnet und bei umgesteuert angetriebenem Ventilator im Luftstrom hinter dem Heizelement angeordnet ist.

Der Betrieb des Kühllastwagens erfolgt vorteilhaft erfindungsgemäß derart, daß zum Kühlen der plusgradig eingestellten Kammer ein Kaltluftstrom aus der Tiefkühlkammer abgesaugt und zum Heizen der plusgradig eingestellten Kammer ein über ein Heizelement erwärmter Luftstrom in die plusgradig eingestellte Kammer eingeblasen wird.

Ersichtlicherweise ist es also durch wirtschaftlich zu erstellende und sicher zu betreibende Einrichtungsgegenstände möglich, eine plusgradig unter allen Umweltbedingungen zu betreibende weitere Kammer in einem Kühllastkraftwagen zu haben und angesichts der Vorteile der Erfindung kann von einer idealen Lösung der anstehenden Probleme gesprochen werden.

Im folgenden wird ein Ausführungsbeispiel der Erfindung anhand von Zeichnungen näher beschrieben. Es zeigt

Fig. 1 schematisch die Luftzirkulation bei Kühlung der plusgradigen Kammer und

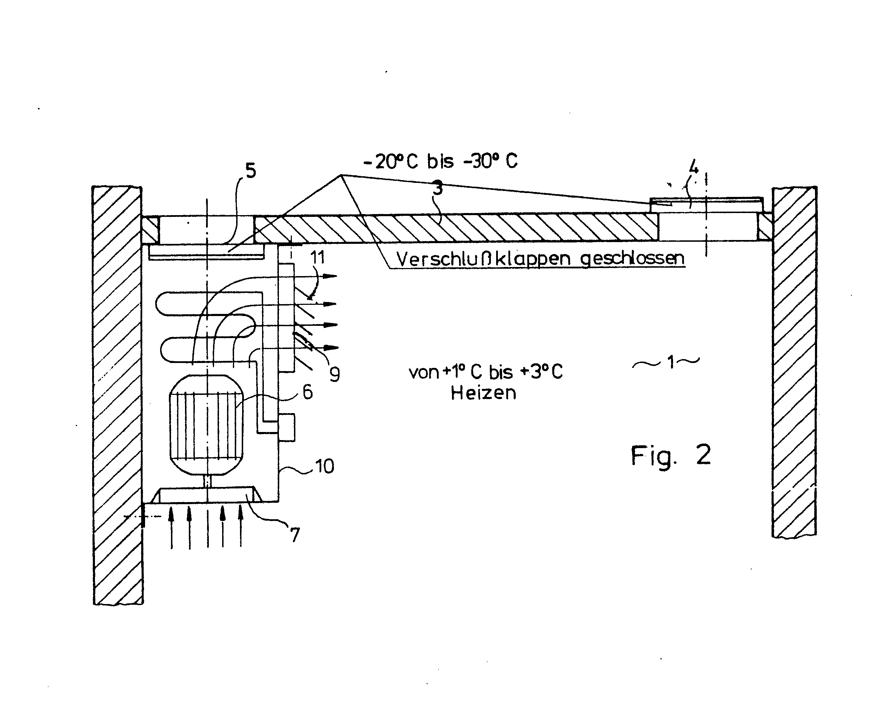

Fig. 2 schematisch die Heizung der plusgradigen Kammer bei Temperaturen unter dem Gefrierpunkt.

Die erfindungsgemäße Lösung besteht darin, daß neben der Tiefkühlkammer oder -abteilung eines Kühllastkraftwagens, welche in herkömmlicher Art durch ein Tiefkühlaggregat thermostatgesteuert gekühlt wird, eine weitere Kammer vorgesehen ist, die plusgradig betrieben wird und die bei Unterschreiten der gewünschten Temperatur durch einen über ein Heizelement erwärmten Luftstrom erwärmt und bei Überschreiten der gewünschten Temperatur durch einen aus der Tiefkühlkammer stammenden Kaltluftstrom gekühlt wird.

Der erfindungsgemäße Kühllastkraftwagen weist dementsprechend eine plusgradig betriebene Kammer 1 und davon durch eine Isolationswand 3 getrennt eine Tiefkühlkammer 2 auf, wobei beispielsweise in der Tiefkühlkammer eine Temperatur von − 20 bis − 30°C und in der plusgradig betriebenen Kammer eine Temperatur von ca. 3°C eingestellt wird. Bei Unterschreiten dieser Temperatur erfolgt das beschriebene Kühlen und bei Überschreiten die beschriebene Erwärmung.

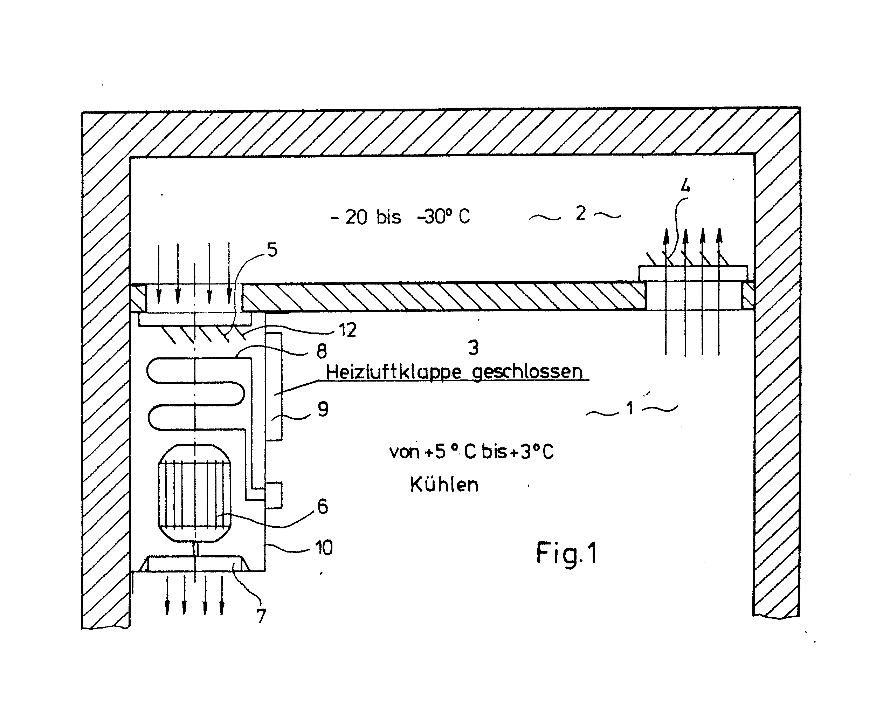

In der Isolationswand 3 ist eine Rückschlagklappe 4 aus einzelnen, um eine vertikale Achse verschwenkbaren Lamellen 12 bestehende Rückschlagklappe 4 eingesetzt, durch welche Luft aus der plusgradig eingestellten Kammer 1 in die Tiefkühlkammer 2 strömen kann. Luft wird weiterhin durch eine der Klappe 4 entsprechende Rückschlagklappe 5 in der Isolationswand 3 aus der Tiefkühlkammer durch ein Gehäuse 10 in die Kammer 1 geblasen, wobei die Luftzirkulation durch einen von einem Elektromotor 6 angetriebenen Ventilator 7 hervorgerufen wird. Der Betrieb des Elektromotors 6 ist dabei thermostatgesteuert und die Luftführung entspricht den Pfeilen 11 gemäß Fig. 1.

Zum Heizen wird der Elektromotor 6 umgesteuert, der doppelt wirkende Ventilator läuft dann rückwärts und drückt einen Luftstrom aus der Kammer 1 durch das Gehäuse 10 über ein Heizelement 8 und dann durch eine weitere Rückschlagklappe 9 mit sich gegenüber dem Gehäuse nach außen öffnenden Lamellen 11 zurück in die Kammer 1. Der Betrieb des Elektromotors und/oder des Heizelementes 8 ist dabei ebenfalls thermostatgesteuert. Bei dem Elektromotor 6 handelt es sich um einen an sich bekannten Drehstrommotor, so daß eine weitere Beschreibung desselben entfallen kann. Die Rückschlagklappen 4, 5 und 9 sind selbsttätig und eine Steuerung derselben kann entfallen, so daß die gesamte Temperatursteuerung rein elektrisch über Thermostaten und den Betrieb des Elektromotors bzw. des Heizelementes erfolgt, wodurch nicht nur eine besondere Wirtschaftlichkeit im Aufbau des erfindungsgemäßen Kühllastkraftwagens erreicht wird, sondern auch ein störungsfreier Betrieb ermöglicht wird.

Dabei muß berücksichtigt werden, daß auch bei höheren Außentemperaturen die Kälte aus dem vorderen Bereich nach hinten durchschlägt, so daß sonst häufig zu geringe Temperaturen auftreten würden.

### Patentansprüche

1. Kühllastkraftwagen, der eine von einem Kühlaggregat gekühlte Tiefkühlkammer (2) aufweist, wobei er weiterhin eine gering plusgradig eingestellte, von der Tiefkühlkammer durch eine Isolationswand (3) getrennte Kammer (1) aufweist, in der Isolationswand zwei Verschlußklappen (4, 5) vorhanden sind, von denen die eine (4) einen Lufteintritt aus der plusgradig eingestellten Kammer in die Tiefkühlkammer und die andere (5) einen Luftaustritt aus der Tiefkühlkammer in die plusgradig eingestellte Kammer (1) gestattet und daß ein von einem Elektromotor (6) angetriebener Ventilator (7) zur Luftzirkulation durch die Klappen (4, 5) in Abhängigkeit von einer Thermostatsteuerung vorhanden ist, dadurch gekennzeichnet, daß in einem zweiten, von dem Elektromotor (6) über den gleichen Ventilator (7) erzeugten Zirkulationsluftstrom ein thermostatgesteuertes Heizelement (8) angebracht ist.

2. Kühllastkraftwagen nach Anspruch 1, dadurch gekennzeichnet, daß der Elektromotor (6) umsteuerbar und der Ventilator (7) doppelt wirkend ist und diese in einem Gehäuse (10) eingebaut sind, in welches einseitig die Saug-Verschlußklappe (5) mündet und welches neben der Ventilatoröffnung eine weitere Rückschlagklappe (9) aufweist, die sich gegenüber dem Gehäuse (10) nach außen öffnet und bei umgesteuert angetriebenem Ventilator (7) im Luftstrom hinter dem Heizelement (8) angeordnet ist.

3. Kühllastkraftwagen nach Anspruch 1 oder 2, dadurch gekennzeichnet, daß die Verschlußklappen (4, 5) Rückschlagklappen sind.

4. Kühllastkraftwagen nach Anspruch 3, dadurch gekennzeichnet, daß die Verschlußklappen (4, 5) aus einzelnen, durch die Luftzirkulation um eine vertikale Achse verschwenkbaren Lamellen (12) bestehen.

5. Verfahren zum Betreiben des Kühllastkraftwagens nach einem der vorhergehenden Ansprüche, dadurch gekennzeichnet, daß zum Kühlen der plusgradig eingestellten Kammer (1) ein Kaltluftstrom aus der Tiefkühlkammer (2) abgesaugt und zum Heizen durch Umsteuern des Motors (6) der plusgradig eingestellten Kammer ein über ein Heizelement (8) erwärmter Luftstrom in die plusgradig eingestelle Kammer eingeblasen wird, wodurch zugleich automatisch die Kaltlufteintrittsklappe (5) geschlossen wird.

### Claims

1. A refrigerator truck comprising a deep-freezing compartment (2) cooled by a refrigerator unit, and further comprising a compartment (1) set to a low positive temperature and separated from the deep-freezing compartment by an insulation wall (3), with a pair of shutters (4, 5) being provided in the insulation wall, one shutter (4) permitting entry of air from the positive-temperature compartment to the deep-freezing compartment, and the other shutter (5) permitting exit of air from the deep-freezing compartment to the positive-temperature compartment (1), and wherein a ventilator or fan (7) driven by an electric motor (6) is provided to circulate air through the shutters (4, 5) in response to a thermostatic control, characterized in that a thermostat-controlled heater element (8) is installed within a second circulation air flow produced by the electric motor (6) through the same ventilator (7).

2. The refrigerator truck according to claim 1, characterized in that the electric motor (6) is reversible, and the ventilator (7) of the double-acting type, and these units are installed in a housing (10) into one side of which the suction shutter (5) opens and which includes adjacent to the ventilator opening a further check valve (9) adapted to open outwards relative to the housing (10) and being positioned in the air flow downstream of the heater element (8) when the ventilator (7) is driven reversely.

3. The refrigerator truck according to claims 1 or 2, characterized in that the shutters (4, 5) comprise check valves.

4. The refrigerator truck according to claim 3, characterized in that the shutters (4, 5) comprise separate slats (12) adapted to be pivoted about a vertical axis by the circulated air.

5. Method of operating the refrigerator truck according to any one of the preceding claims, characterized in that for the cooling of the compartment (1) set to a positive temperature, a cold air flow is drawn by suction from the deep-freezing compartment (2), and for the heating of the positive-temperature compartment by reversing the motor (6), an air flow heated by a heater element (8) is blown into the positive-temperature compartment, whereby the cold air inlet shutter (5) is simultaneously closed automatically.

### Revendications

1. Camion frigorifique présentant un compartiment frigorifique (2) à basse température, refroidi par un groupe frigorifique, et un compartiment (1) à faible température réglée à une valeur positive en degrés, ce compartiment à faible température positive (1) étant séparé du compartiment frigorifique à basse température (2) par un paroi isolante (3) dans laquelle sont agencés deux obturateurs mobiles (4, 5), à savoir un premier obturateur (4) permettant à de l'air venant du compartiment à faible température positive (1) d'entrer dans le compartiment à basse température (2), et un deuxième obturateur mobile (5) permettant à de l'air de sortir du compartiment frigorifique à basse température (2) pour aller dans le compartiment à faible température positive (1), un ventilateur (7) entraîné par un moteur électrique (6) étant agencé pour provoquer la circulation d'air par les obturateurs mobiles (4, 5) en fonction d'une commande par thermostat, caractérisé en ce qu'un élément chauffant (8), commandé par thermostat, est agencé dans un deuxième courant de circulation d'air engendré par le moteur électrique (6) opérant par le même ventilateur (7).

2. Camion frigorifique selon la revendication 1, caractérisé en ce que le moteur électrique (6) est commutable de façon que son sens de rotation puisse être inversé, en ce que le ventilateur (7) peut opérer dans les deux sens, et en ce que ce moteur (6) et ce ventilateur (7) sont montés dans une enceinte (10) dans laquelle le deuxième obturateur mobile (5) débouche unidirectionnellement, cette enceinte (10) présentant, outre l'ouverture de ventilateur, un autre obturateur mobile (9) qui ouvre vers l'extérieur de cette enceinte (10) et qui, si l'on considère le courant d'air existant lorsque le ventilateur (7) est entraîné en condition d'inversion, est situé en aval de l'élément chauffant (8).

3. Camion frigorifique selon la revendication 1 ou 2, caractérisé en ce que les obturateurs mobiles (4, 5) sont des clapets antiretour.

4. Camion selon la revendication 3, caractérisé en ce que les obturateurs mobiles (4, 5) sont constitués par des lamelles (12) aptes à pivoter autour d'un axe vertical sous l'effet de la circulation d'air.

5. Procédé d'exploitation du camion frigorifique selon l'une quelconque des revendications précédentes, caractérisé en ce que, pour refroidir le compartiment (1) à température réglée à une valeur positive en degrés, on aspire un courant d'air froid venant du compartiment frigorifique à basse température (2) et, pour chauffer le compartiment à température positive (1), on insuffle dans celui-ci, par inversion du sens de rotation de son moteur (6), un courant d'air échauffé par passage sur un élément chauffant (8), ce courant d'air fermant en même temps automatiquement l'obturateur mobile (5) de l'entrée d'air froid.

- 20 bis -30° C     ~ 2 ~

5

12

8

Heizluftklappe geschlossen

3

9

von +5 ° C bis +3°C

Kühlen

6

10

~ 1 ~

4

7

Fig.1

0 061 708

-20°C bis -30°C

5

4

3

Verschlußklappen geschlossen

11

9

6

von +1°C bis +3°C
Heizen

~1~

10

7

Fig. 2

0 061 708